# EUROPÄISCHE PATENTANMELDUNG

(11) **EP 1 178 615 A2**
(43) Veröffentlichungstag der Anmeldung: **06.02.2002**
(21) Anmeldenummer: 01440204.4
(22) Anmeldetag: 04.07.2001
(51) Int. Cl.: H04B 1/707

(54) **Verfahren zum Übertragen von Nutzdatenpaketen**

(30) Priorität: 05.08.2000 DE 10038314
(71) Anmelder: ALCATEL, 75008 Paris (FR)
(72) Erfinder: Jaenecke, Peter, Dr., 75334 Straubenhardt (DE); Schwoerer, Gabriele, 71263 Weil der Stadt (DE); Jacob, Gunther, 71277 Rutesheim (DE); Oberle, Karsten, 68199 Mannheim (DE); Otterbach, Jürgen, 70499 Stuttgart (DE); Halbauer, Hardy, 76275 Ettlingen (DE)
(74) Vertreter: Menzietti, Domenico, Dipl.-Ing

(57) **Zusammenfassung**

Aufgabe der Erfindung ist es, ein Verfahren zum Übertragen von Nutzdatenpaketen von einer Endstelle zu einer Zentrale eines S-CDMA Punkt-zu-Mehrpunkt Systems zur Verfügung zu stellen, bei dem die Datenübertragung optimiert ist. Das erfindungsgemäße Verfahren ist gekennzeichnet durch das wiederholte Aussenden von mit Pilot-Kodes kodierten Referenzdatenpaketen für die Dauer der Verbindungen zwischen Endstellen und Zentrale, wobei die Referenzdatenpakete vorbekannte Informationen enthalten, und das Aussenden von mit Kommunikations-Kodes kodierten Nutzdatenpaketen, die die zu übertragenden Nutzinformationen beinhalten. In einer bevorzugten Ausführungsform der Erfindung werden die Nutzdatenpakete zeitlich synchron zu den Referenzdatenpaketen kodiert, diesen überlagert und anschließend moduliert ausgesendet. Jeder Endstelle wird z.B. zumindest für die Dauer einer Verbindung ein Pilot-Kode zugewiesen und zumindest für die Dauer der Übertragung eines Nutzdatenpakets mindestens ein Kommunikations-Kode.

## Beschreibung

Die Erfindung betrifft ein Verfahren zum Übertragen von Nutzdatenpaketen von einer Endstelle zu einer Zentrale eines S-CDMA Punkt-zu-Mehrpunkt Systems sowie die Zentrale für das S-CDMA Punkt-zu-Mehrpunkt System und eine Sendeeinrichtung.

Punkt-zu-Mehrpunkt Systeme im Zugangsbereich sind z.B. als HFC-, HFR-oder LMDS-Systeme ausgebildet und beinhalten zumeist eine Zentrale, z.B. als Basisstation ausgeführt, an die mehrere Endstellen angeschlossen sind; HFC=Hybrid Fibre Coax, HFR=Hybrid Fibre Radio, LMDS=Local Multipoint Distribution Services. In all diesen Punkt-zu-Mehrpunkt-Systemen kann CDMA als Zugriffsverfahren verwendet werden; CDMA=Code Division Multiple Access. Eine besondere Ausgestaltung des CDMA stellt das S-CDMA dar; S-CDMA=Synchronous-CDMA.

Beim S-CDMA werden den Endstellen Kommunikations-Kodes zur Übertragung von Nutzdatenpaketen zur Zentrale zugewiesen. Alle Kommunikations-Kodes sind beispielsweise CDMA-Kodes einer Kode Familie. Die Kommunikations-Kodes werden dazu verwendet, Informationen von den Endstellen zur Zentrale zu übertragen. Die zu übertragenden Nutzdatenpakete enthalten zum einen z.B. die Adresse der Endstelle, Synchronisationssignale, weitere Verwaltungsinformationen, etc. und zum anderen die zu übertragenden Nutzinformationen. Jedes zu übertragende Nutzdatenpaket, das Nutzbits enthält, wird vor der Aussendung mit einem Kommunikatons-Kode kodiert. Die Kodierung erfolgt z.B. durch bitweise Multiplikation mit dem Kommunikations-Kode. Jeder Kommunikatons-Kode stellt einen Übertragungskanal zur Verfügung. Durch das Kodieren wird jedes zu übertragende Nutzdatenbit gespreizt. Auf der Empfangsseite wird durch erneute Multiplikation mit dem selben Kommunikations-Kode die Entspreizung durchgeführt. Zusätzlich zur Kodierung kann eine HF-Modulation durchgeführt werden;
HF=Hochfrequenz. Auf der Empfangsseite wird eine entsprechende Demodulation durchgeführt.

In vielen Anwendungsfällen, z.B. beim Surfen im Internet, werden die Nutzdatenpakete nicht kontinuierlich zur Zentrale übertragen, sondern diskontinuierlich, d.h. auf einem sog. bursty way. Die Zentrale muss sich bei dieser Art von Datenübertragung bei jedem empfangenen Nutzdatenpaket neu auf dieses aufsynchronisieren. Das Nutzdatenpaket beinhaltet dazu eine verhältnismäßig lange Präambel. Beim LMDS-System wird diese Präambel z.B. dazu verwendet, den Frequenz-Offset sowie die Phase des von einer Endstelle empfangenen Funksignals zu ermitteln. Je höher die Bitrate, desto länger muss die Präambel gewählt werden.

Gerade im Funkbereich stehen wenig Übertragungskanäle und eine limitierte Kapazität zu Verfügung. Ein verhältnismäßig lange Präambel reduziert die Datenrate und blockiert Übertragungskapazität.

Aufgabe der Erfindung ist es, ein Verfahren zum Übertragen von Nutzdatenpaketen von einer Endstelle zu einer Zentrale eines S-CDMA Punkt-zu-Mehrpunkt Systems zur Verfügung zu stellen, bei dem die Datenübertragung optimiert ist.

Gelöst wird diese Aufgabe durch ein Verfahren gemäß Patentanspruch 1, ein Verfahren gemäß Patentanspruch 2 sowie eine Zentrale gemäß Patentanspruch 6 und eine Sendeeinrichtung nach Anspruch 11.

Die Erfindung ist insbesondere dadurch gekennzeichnet, dass zum einen Pilot-Kodes und Referenzdatenpakete zusätzlich zu den Kommunikations-Kodes und den Nutzdatenpaketen verwendet werden und zum anderen Nutzdatenpakete mit einer erheblich kürzeren Präambel, im Idealfall ohne Präambel, verwendet werden. Die Referenzdatenpakete werden für die Dauer der Verbindungen der Endstellen mit der Zentrale kontinuierlich übertragen. Dies bedeutet, dass für jede Verbindung einer Endstelle zur Zentrale, z.B. einer Basisstation, ein bestimmtes Referenzdatenpaket kontinuierlich oder in vorgegebenen zeitlichen Abständen wiederholt zur Zentrale übertragen wird. Das Referenzdatenpaket beinhaltet ausschließlich vorbekannte Informationen. Diese Informationen können beliebig gewählt werden und z.B. sein: die Adresse der Endstelle, die Präambel, eine vorbekannte Bitfolge, die Rauschen simuliert, etc. Die Referenzdatenpakete haben die Aufgabe, die Zentrale in die Lage zu versetzen die Synchronisation auch während der Zeitpunkte aufrechtzuerhalten, in denen die Endstellen keine Nutzdatenpakete übertragen. Die Zentrale und die jeweilige Endstelle sind somit während der gesamten Dauer der Verbindung stets synchronisiert. Wird nun von der Endstelle ein Nutzdatenpaket zur Zentrale übertragen, so entfällt im Idealfall die Aufsynchronisation. Die Zentrale kann direkt mit der Auswertung beginnen. Die Nutzdatenpakete benötigen damit im Idealfall keine Präambel mehr. Damit kann die begrenzte Übertragungskapazität im System besser ausgenutzt werden.

In einer in einer Endstelle angeordneten Sendeeinrichtung für ein S-CDMA System ist ein erster Kodierer zum Kodieren eines Referenzdatenpakets mit einem Pilot-Kode und ein zweiter Kodierer zum Kodieren von Nutzdatenpaketen mit mindestens einem Kommunikations-Kode vorgesehen. Das Referenzdatenpaket enthält vorbekannte Informationen und die Nutzdatenpaketen beinhalten die zu übertragenden Nutzinformationen. Die Kodierung des Referenzdatenpakets mit dem Pilot-Kode erfolgt zeitlich synchron zur Kodierung eines Nutzdatenpakets mit einem Kommunikations-Kode. Ferner ist ein Addierer zum Addieren der Ausgangssignale der Kodierer vorgesehen. Des weiteren ist ein Modulator zum HF-Modulieren der Ausgangssignale des Addierers vorgesehen ist;
HF=Hochfrequenz. Aus jedem zeitlich synchron kodierten Referenzdatenpaket und Nutzdatenpaket oder Nutzdatenpaketen wird ein Summensignal gebildet, das nach einer anschließenden Modulation zur Zentrale gesendet wird. Referenzdatenpakete und Nutzdatenpakete werden somit zeitlich synchron zueinander übertragen. Es erfolgt damit eine überlagerte Aussendung von Referenzdatenpaketen und Nutzdatenpaketen. Die Aussendung der Referenzdatenpakete darf dabei die Übertragung der Nutzdatenpakete nicht oder nur in geringem Maße beeinträchtigen. Die Pilot-Kodes sind daher z.B. CDMA-Kodes und die Kommunikations-Kodes CDMA-Kodes, wobei die Pilot-Kodes aus einer gegenüber den Kommunikations-Kodes anderen CDMA Kode Familie stammen und wobei kein Pilot-Kode identisch zu irgendeinem Kommunikations-Kode ist. Die Pilot-Kodes sind z.B. orthogonal oder nicht orthogonal zueinander. Die Kommunikations-Kodes sind hingegen orthogonal zueinander. Die Pilot-Kodes können auch aus Kode-Familien stammen, die keine CDMA-Kodes enthalten. Zudem können die Signalpegel von Referenzdatenpaketen und Nutzdatenpaketen unterschiedlich gewählt werden. Die Signalpegel der Nutzdatenpakete werden z.B. höher gewählt als die Signalpegel der Referenzdatenpakete, z.B. um den Faktor Zwei.

Ein Vorteil der Erfindung liegt darin, dass die Pilot-Kodes zusätzlich verwendet werden können, um die Performance des Systems zu verbessern. Beispielsweise ist in der Zentrale eine Messeinheit vorgesehen werden, um das aktuelle Signal-zu-Rausch Verhältnis für jede Verbindung zu einer Endstelle aus den empfangenen Referenzdatenpaketen zu ermitteln. Des weiteren kann in der Zentrale eine Mess- und Steuereinheit vorgesehen werden, zum Messen der Signalpegel der empfangenen Referenzdatenpakete. In Abhängigkeit von den gemessenen Signalpegeln regelt die Zentrale telemetrisch die Sendepegel der Endstellen, die Signalpegel der Referenzdatenpakete und/oder die Signalpegel der Nutzdatenpakete.

Im folgenden wird ein Ausführungsbeispiel der Erfindung beschrieben:

Ein S-CDMA LMDS System ist ein zellulares Funksystem. In jeder Zelle befindet sich eine Basisstation, die die Steuerung der Zelle übernimmt. Die Basisstation kommuniziert mit Endstellen, die sich in der Zelle befinden. Jede Endstelle benutzt ein mit einem Pilot-Kode kodiertes Referenzdatenpaket zur Aufrechterhaltung der Synchronisation zur Basisstation und mindestens einen Kommunikations-Kode zur Kodierung der zu übertragenden Nutzdatenpakete. Die Nutzdatenpakete beinhalten z.B. Abrufsignale für Service-on-demand Anwendungen, Auswahlsignale für Internetseiten, Telefonsignale, Bilddaten, etc. Jeder Endstelle wird ein Pilot-Kode zugewiesen und mindestens ein Kommunikations-Kode. Die Zuweisung der Pilot-Kodes erfolgt z.B. zentral einmal bei der Inbetriebnahme des Systems oder beim Aufbau einer Verbindung für die Dauer der Verbindung jeweils neu. Die Zuweisung der Kommunikations-Kodes erfolgt z.B. beim Aufbau einer Verbindung für die Dauer der Verbindung oder für die Dauer der Übertragung eines Nutzdatenpakets jeweils neu. Als Kommunikations-Kodes werden orthogonale CDMA-Kodes verwendet. Als Pilot-Kodes werden beispielsweise ebenfalls CDMA-Kodes verwendet, allerdings aus einer anderen Kode-Familie, wobei kein Pilot-Kode mit irgendeinem Kommunikations-Kode identisch ist. Der Überragungskanal für die Referenzdatenpakete ist für die Dauer einer Verbindung z.B. stets durchgeschaltet. Dies bedeutet, dass kontinuierlich von einer Endstelle Referenzdatenpakete gleichen Inhalts wiederholt zeitlich nacheinander und ohne zeitliche Lücken zwischen den Referenzdatenpaketen ausgesendet werden. Alternativ ist der Übertragungskanal für die Referenzdatenpakete für die Dauer einer Verbindung in äquidistanten Abständen durchgeschaltet. Dies bedeutet, dass von einer Endstelle Referenzdatenpakete gleichen Inhalts wiederholt zeitlich nacheinander und mit zeitliche Lücken zwischen den Referenzdatenpaketen ausgesendet werden. In diesem Fall können die zeitlichen Lücken zur Übertragung von Referenzdatenpaketen mindestens einer anderen Endstelle genutzt werden. Dabei können für beide Endstellen ein und derselbe Pilot-Kode verwendet werden. Dieses Prinzip lässt sich gegebenenfalls auf weitere Endstellen ausweiten, wodurch die Anzahl der Pilot-Kodes minimiert würde. Die Übertragung von Referenzdatenpaketen kann auch während der Zeitspannen in denen Nutzdatenpakete übertragen werden gestoppt werden. Es werden dann entweder Referenzdatenpakete oder Nutzdatenpakete ausgesandt. Es erfolgt damit keine überlagerte Aussendung eines Referenzdatenpakets und eines Nutzdatenpakets. In der Zentrale können sowohl aus den Referenzdatenpaketen als auch aus den Nutzdatenpaketen Synchronisationsinformationen sowie Informationen über die Signalqualität abgeleitet werden. Somit wird insbesondere die Synchronisation auch während der Zeitspannen bzw. in den Zeitschlitzen in denen keine Referenzdatenpakete gesendet werden aufrechterhalten. In diesem Fall können die Zeitschlitze zur Übertragung von Referenzdatenpaketen mindestens einer anderen Endstelle genutzt werden, wodurch die Anzahl der Pilot-Kodes weiter minimiert werden könnte.

Der Übertragungskanal für die Nutzdatenpakete ist vorteilhafterweise nur in den Zeitspannen durchgeschaltet, zu denen Nutzdatenpakete gesendet werden. Für die Übertragung eines Nutzdatenpakets können z.B. gleichzeitig mehrere Kommunikations-Kodes verwendet werden. Die verschiedenartig kodierten Nutzdatenpaketteile werden dann durch Addition überlagert und anschließend zusammen mit dem Referenzdatenpaket ausgesandt. Werden von einer Endstelle keine Nutzdatenpakete übertragen, können die entsprechenden Kommunikations-Kodes für die Nutzdatenpaketübertragung anderer Endstellen verwendet werden. Beim Burstbetrieb, z.B. Surfen im Internet, reicht dann z.B. ein Kommunikations-Kode für eine bestimmte Anzahl von Endstellen aus.

Jedes Referenzdatenpaket beinhaltet vorab bekannte Informationen, z.B. die Adresse der Endstelle, eine Präambel, eine vordefinierte Bitfolge. Für die Dauer der Verbindung zur Basisstation wird das Referenzdatenpaket von der Endstelle wiederholt, z.B. kontinuierlich oder in äquidistanten Zeitabständen, ausgesendet; bei der Aussendung in äquidistanten Zeitabständen z.B. jede Sekunde einmal oder einmal alle 10 Sekunden. Die Basisstation empfängt daher zeitlich nacheinander stets das gleiche Referenzdatenpaket der Endstelle. Die Basisstation kann dieses Referenzdatenpaket auf einfache Art und Weise detektieren, da dieses immer den gleichen Inhalt hat, nämlich die der Basisstation vorbekannte Information. Die Basisstation hat eine Synchronisationseinheit, in der sie die Frequenz und die Phase der Referenzdatenpakets ermittelt und auswertet. Die Synchronisationseinheit ist beispielsweise in der Lage eine Chip Phase Synchronisation und eine RF Phase Synchronisation durchzuführen;
RF=Radio Frequency. Letztere dient z.B. der kohärenten Demodulation.

Die zu übertragenden Nutzdatenpakete werden mit mindestens einem Kommunikations-Kode kodiert und zeitlich parallel zu den Referenzdatenpaketen und diesen überlagert ausgesandt. Basisstation und Endstelle sind während der Dauer einer Verbindung durch die Referenzdatenpakete und deren Auswertung synchronisiert. Die Nutzdatenpakete können unter Berücksichtigung des Taktmusters zu beliebigen Zeitpunkten ausgesandt werden. Eine Aufsynchronisation der Basisstation beim Empfang eines Nutzdatenpakets ist nicht mehr erforderlich. Die Auswertung kann direkt erfolgen.

Neben der Funktion der Aufrechterhaltung der Synchronisation in Zeitspannen, in denen keine Nutzdatenpakete übertragen werden, haben die Referenzdatenpakete optional eine Zusatzfunktion. Jedes Referenzdatenpaket kann zur Verbesserung der Performance im System verwendet werden. Durch Messen des Signal-zu-Rausch Verhältnisses eines Referenzdatenpakets kann die Übertragungsqualität eines Kanals bestimmt werden. Liegt das gemessene Signal-zu-Rausch Verhältnisses unterhalb einer vorgegebenen unteren Schwelle, so informiert die Basisstation die Endstelle darüber und fordert sie auf den Sendepegel für die nächsten Referenzdatenpakete zu erhöhen. Liegt das gemessene Signal-zu-Rausch Verhältnisses oberhalb einer vorgegebenen oberen Schwelle, so informiert die Basisstation die Endstelle darüber und fordert sie auf, den Sendepegel für die nächsten Referenzdatenpakete zu erniedrigen. Liegt das gemessene Signal-zu-Rausch Verhältnis innerhalb der unteren und oberen Schwelle, so erfolgt keine Änderung. Das Signal-zu-Rausch Verhältnis eines Referenzdatenpakets kann als Maß für das Signal-zu-Rausch Verhältnis eines Nutzdatenpakets verwendet werden. Die Aufforderungen zum Erhöhen bzw. Erniedrigen der Signalpegel der Referenzdatenpakete können daher auch für die Nutzdatenpakete verwendet werden. Wird eine Endstelle z.B. dazu aufgefordert den Signalpegel der nächsten Referenzdatenpakete zu erhöhen werden automatisch auch die Signalpegel der nächsten Nutzdatenpakete erhöht.

Anstelle der Messung der Signal-zu-Rausch Verhältnisse können auch die Absolutwerte der empfangenen Signalpegel gemessen werden. Liegt ein empfangener Signalpegel unterhalb einer unteren Schwelle wird die Endstelle aufgefordert die Sendeleistung zu erhöhen, liegt er über einer oberen Schwelle wird sie aufgefordert die Sendeleistung zu erniedrigen. Sowohl Messung als auch Aufforderung können sich auf Referenzdatenpaket und/oder Nutzdatenpaket beziehen. Die Basisstation führt dann ein sog. Power Levelling durch.

Die Erfindung kann auf alle Punkt-zu-Mehrpunkt Systeme im Zugangsbereich, wie z.B. HFC, HFR, LMDS angewendet werden. Anstelle in einer Basisstation, wie beim Ausführungsbeispiel, können eine, zwei oder mehr der folgenden Funktionen auch erst in einer übergeordneten Einheit durchgeführt werden: Synchronisation, Messung des Signal-zu-Rausch Verhältnisses, Messung der Signalpegel, Power Levelling, Dekodierung, Demodulation.

## Patentansprüche

1. Verfahren zum Übertragen von Nutzdatenpaketen von einer Endstelle zu einer Zentrale eines S-CDMA Punkt-zu-Mehrpunkt Systems, **gekennzeichnet durch** das wiederholte Aussenden eines mit einem Pilot-Kode kodierten Referenzdatenpakets für die Dauer der Verbindung zwischen Endstelle und Zentrale, wobei das Referenzdatenpaket vorbekannte Informationen enthält, und das sequentielle Aussenden von mit mindestens einem Kommunikations-Kode kodierten Nutzdatenpaketen, die jeweils die zu übertragenden Nutzinformationen beinhalten.

2. Verfahren nach Anspruch 1, **dadurch gekennzeichnet, dass** jeder Endstelle zumindest für die Dauer einer Verbindung ein Pilot-Kode zugewiesen wird und dass jeder Endstelle zumindest für die Dauer der Übertragung eines Nutzdatenpakets mindestens ein Kommunikations-Kode zugewiesen wird.

3. Verfahren nach Anspruch 1, **dadurch gekennzeichnet, dass** die Kodierung des Referenzdatenpakets mit dem Pilot-Kode zeitlich synchron zur Kodierung der Nutzdatenpakete mit dem mindestens einen Kommunikations-Kode erfolgt.

4. Verfahren nach Anspruch 3, **dadurch gekennzeichnet, dass** aus jedem zeitlich synchron kodierten Referenzdatenpaket und Nutzdatenpaket oder Nutzdatenpaketen ein Summensignal gebildet wird, das nach einer anschließenden Modulation zur Zentrale gesendet wird.

5. Verfahren nach Anspruch 1, **dadurch gekennzeichnet, dass** zu den Zeitpunkten zu denen ein Nutzdatenpaket ausgesendet wird kein Referenzdatenpaket ausgesendet wird.

6. Verfahren nach Anspruch 1, **dadurch gekennzeichnet, dass** die Pilot-Kodes CDMA-Kodes und die Kommunikations-Kodes CDMA-Kodes sind, wobei die Pilot-Kodes aus einer gegenüber den Kommunikations-Kodes anderen CDMA Kode Familie stammen und wobei kein Pilot-Kode identisch zu irgendeinem Kommunikations-Kode ist.

7. Verfahren nach Anspruch 1, **dadurch gekennzeichnet, dass** die Pilot-Kodes orthogonal zueinander sind, und dass die Kommunikations-Kodes orthogonal zueinander sind.

8. Verfahren nach Anspruch 1, **dadurch gekennzeichnet, dass** die Pilot-Kodes nicht orthogonal zueinander sind, und dass die Kommunikations-Kodes orthogonal zueinander sind.

9. Zentrale für ein S-CDMA Punkt-zu-Mehrpunkt System zum Übertragen von Nutzdatenpaketen von Endstellen zur Zentrale, **dadurch gekennzeichnet, dass** die Zentrale geeignet ist, bei jeder Verbindung zu einer Endstelle wiederholt ein mit einem Pilot-Kode kodiertes Referenzdatenpaket, das vorbekannte Informationen enthält, zu empfangen und aus dem Signal des Referenzdatenpakets Synchronisationsinformationen abzuleiten, und dass die Zentrale geeignet ist, bei jeder Verbindung zu einer Endstelle mit mindestens einem Kommunikations-Kode kodierte Nutzdatenpakete beinhaltend Nutzinformationen zu empfangen.

10. Zentrale nach Anspruch 9, **dadurch gekennzeichnet, dass** die Zentrale geeignet ist, aus dem Signal des Referenzdatenpakets Informationen über die Signalqualität abzuleiten.

11. Zentrale nach Anspruch 9, **dadurch gekennzeichnet, dass** eine Steuereinheit vorgesehen ist, zum Zuweisen von Pilot-Kodes und Kommunikations-Kodes zu Endstellen, wobei von der Steuereinheit für jede Verbindung einer Endstelle zur Zentrale ein Pilot-Kode und zumindest für die Dauer der Übertragung eines Nutzdatenpaketes mindestens ein Kommunikations-Kode vergeben wird.

12. Zentrale nach Anspruch 9, **dadurch gekennzeichnet, dass** mindestens eine Messeinheit vorgesehen ist, zum Ermitteln des Signal-zu-Rausch Verhältnisses für jede Verbindung zu einer Endstelle aus den empfangenen Pilot-Kodes.

13. Zentrale nach Anspruch 9, **dadurch gekennzeichnet, dass** mindestens eine Mess- und Steuereinheit vorgesehen ist, zum Messen der Signalpegel der empfangenen Referenzdatenpakete und zum telemetrischen Regeln der Sendepegel der Endstellen für die Referenzdatenpakete und/oder die Nutzdatenpakete in Abhängigkeit von den gemessenen Signalpegeln.

14. Zentrale nach Anspruch 9, **dadurch gekennzeichnet, dass** die Zentrale als Basisstation für ein LMDS-System ausgebildet ist.

15. Sendeeinrichtung für ein S-CDMA System, **dadurch gekennzeichnet, dass** ein erster Kodierer zum Kodieren eines Referenzdatenpakets mit einem Pilot-Kode und ein zweiter Kodierer zum Kodieren von Nutzdatenpaketen mit mindestens einem Kommunikations-Kode vorgesehen ist, wobei das Referenzdatenpaket vorbekannte Informationen enthält und die Nutzdatenpaketen die zu übertragenden Nutzinformationen beinhalten, und dass ein Addierer zum Addieren der Ausgangssignale der Kodierer vorgesehen ist.

16. Sendeeinrichtung nach Anspruch 15, **dadurch gekennzeichnet, dass** ein Modulator zum HF-Modulieren der Ausgangssignale des Addierers vorgesehen ist.
